Europäisches Patentamt

European Patent Office

Office européen des brevets

(19)

(11) Veröffentlichungsnummer: **0 238 439**
**B1**

(12) **EUROPÄISCHE PATENTSCHRIFT**

(45) Veröffentlichungstag der Patentschrift: **16.01.91**

(51) Int. Cl.⁵: **B 23 K 3/02**

(21) Anmeldenummer: **87730028.5**

(22) Anmeldetag: **18.03.87**

(54) **Lötkolben.**

(30) Priorität: **21.03.86 DE 3610042**

(43) Veröffentlichungstag der Anmeldung:
**23.09.87 Patentblatt 87/39**

(45) Bekanntmachung des Hinweises auf die
Patenterteilung:
**16.01.91 Patentblatt 91/03**

(84) Benannte Vertragsstaaten:
**AT BE CH FR IT LI LU NL**

(56) Entgegenhaltungen:
**DE-C-2 913 384**
**DE-U-8 505 683**

(73) Patentinhaber: **ERSA Ernst Sachs KG GmbH &
Co.**
**Leonhard-Karl-Strasse 24**
**D-6980 Wertheim / Main (DE)**

(72) Erfinder: **Hombrecher, Fritz**
**Oberer Neuberg 9**
**D-6980 Wertheim/Main (DE)**

(74) Vertreter: **Lüke, Dierck-Wilm, Dipl.-Ing.**
**Gelfertstrasse 56**
**D-1000 Berlin 33 (DE)**

Courier Press, Leamington Spa, England.

EP 0 238 439 B1

# Beschreibund

Die Erfindung bezieht sich auf einen Lötkolben gemäß dem Oberbegriff des Anspruches 1.

Bei einem aus der DE-C2-29 13 384 vorbekannten Lötkolben dieser Art ist das aus mehreren Federwindungen gebildete erste Federteil mindestens teilweise mit einem gegenüber dem Außendurchmesser des Stielrohres kleineren Durchmesser versehen, so daß das Federelement mit seinem ersten Federteil mit einem Preßsitz am Außendurchmesser des Stielrohres fest anliegt und somit am Stielrohr unverrückbar festgelegt ist. Das Federteil greift mit einem an seinem Ende angebrachten Haken in eine aufgewölbte Durchbrechung des handgriffseitigen Endes der Lötspitze ein und hält die Lötspitze somit formschlüssig auf dem Stielrohr fest. Nachteilig hierbei ist, daß der Innendurchmesser des ersten Federteiles immer ein bestimmtes Untermaß gegenüber dem Außendurchmesser des Stielrohres aufweisen muß, und daß das Aufbringen des ersten Federteiles auf das Stielrohr wegen des erforderlichen Preßsitzes mit einem erheblichen Kraftaufwand erfolgen muß. Nachteilig ist ferner, daß die Lötspitze mittels des hakenartigen zweiten Federteiles nur gegen ein Abfallen vom Stielrohr gehalten ist. Das durch den Gleitsitz der Lötspitze gebildete Radialspiel gegenüber dem Stielrohr bleibt erhalten. Schließlich müssen die Lötspitzen mit der besonderen aufgewölbten Durchbrechung zum Eingriff des Hakens versehen sein. Ein Nachrüsten bereits vorhandener Lötkolben mit vorhandenen Lötspitzen ist somit nicht möglich.

Es ist weiterhin aus dem DE-U1-85 05 683 ein Lötkolben mit einem Federelement aus zwei im Durchmesser unterschiedlichen Federwindungsteilen bekannt, deren einer Federwindungsteil am Stielrohr festgelegt ist und deren anderer, im Innendurchmesser größerer Federteil etwas kleiner ist als der Außendurchmesser der Lötspitze und diese umfaßt und in axialer Richtung fest am Stielrohr hält. Nachteilig hierbei ist, daß die Innendurchmesser beider Federteile an die Außendurchmesser des Stielrohres bzw. der Lötspitze angepaßt sein müssen. Dies ist insbesondere bei oberflächen-beschichteten Lötspitzen nur durch eine Vielzahl von im Innendurchmesser unterschiedlich abgestuften Federelementen möglich. Darüber hinaus erfordert auch das Montieren dieses bekannten Federelementes größere Kräfte sowohl beim Aufbringen des Federelementes auf das Stielrohr als auch beim Einschieben der Lötspitze in das Federelement. Schließlich ist dieses Federelement nachteilig beim Auswechseln heißer Lötspitzen, da diese aus dem Federelement herausgeschraubt werden müssen.

Der Erfindurg liegt von daher die Aufgabe zugrunde, einen Lötkolben der gattungsgemäßen Art zu schaffen, dessen Federelement auf das Stielrohr leicht aufschiebbar ist und dennoch die Lötspitze unter Aufhebung des Radialspieles sicher auf dem Stielrohr klemmend halten kann.

Die Lösung dieser Aufgabe ergibt sich aus den Merkmalen des Anspruches 1. Durch das Übermaß des Innendurchmessers des auf das Stielrohr aufzuschiebenden ersten Federteiles gegenüber dem Außendurchmesser des Stielrohres wird ein leichtes Aufbringen des Federelementes auf das Stielrohr des Lötkolbens ermöglicht. Das hakenartige zweite Federteil, welches als federnder Haltearm ausgebildet ist, wirkt auf die Lötspitze federnd klemmend ein und hebt einerseits das Radialspiel zwischen Lötspitzenbohrung und Stielrohraußendurchmesser auf und bewirkt andererseits, daß das auf das Stielrohr aufgeschobene erste Federteil sich klemmend an das Stielrohr anlegt. Die Ausbildung des zweiten Federteils als hakenartiger federnder Halteelement hat somit eine Doppelfunktion. Der Hebelarm des Federelementes überbrückt auch kleinere und größere Durchmesserunterschiede im Außendurchmesser der Lötspitzen, so daß eine besondere Anpassung des federnden Hebelarms an verschiedene Lötspitzen nicht erforderlich ist. Auch wird durch das Übermaß der Federwindungen des ersten Federteiles die Möglichkeit gegeben, das Federelement auf Stielrohre mit geringen Durchmesserunterschieden aufschieben zu können. Somit kann das erfindungsgemäße Federelement ferner zur Nachrüstung auch bereits vorhandener Lötkolben dienen. Wenn die Lötspitze vom Stielrohr abgezogen wird, kommt der Hebelarm klemmend auf dem Stielrohr zur Anlage, so daß das Federelement vom Stielrohr nicht abfallen kann.

Weitere vorteilhafte Ausgestaltungen der Erfindung ergeben sich aus den Unteransprüchen. Hierbei wird insbesondere auf die U-förmige Ausgestaltung des hakenartigen zweiten Federteiles hingewiesen, welches mit einem sich an den Außendurchmesser der Lötspitze angepaßten gewölbten Endteil versehen ist. In besonders bevorzugter Weise werden die Lötspitzen am Außendurchmesser mit einer Querrinne oder einem Schlitz zum Eingreifen des gewölbten Endteiles des federnden Haltearmes versehen. Schließlich kann auch das erste Federteil aus zwei Windungsteilen mit unterschiedlicher Steigung ausgebildet sein, ohne daß hierbei die Haltekraft des ersten Federteiles auf dem Stielrohr vermindert wird, wodurch jedoch die Abmessungen des Federelementes derart gewählt werden können, daß dieses auf dem Stielrohr auf Anschlag an den Handgriff herangeschoben werden kann.

Die Erfindung ist nachfolgend anhand mehrerer Ausführungsbeispiele von Federelementen für Lötkolben näher erläutert.

Es zeigen:

Fig. 1 eine Draufsicht auf einen Teil des Handgriffes und das Stielrohr des Lötkolbens mit aufgesteckter und durch ein Federelement in der ersten Ausführungsform gesicherter Lötspitze,

Fig. 2 einen axialen Längsschnitt hierzu,

Fig. 3 die Seitenansicht eines Federelementes im ungespannten Zustand,

Fig. 4 eine Stirnansicht hierzu,

Fig. 5 einen Schnitt gemäß der Linie V-V durch den federnden Haltearm des Federelementes,

Fig. 6, 7 und 8 den Figuren 3 bzw. 4 bzw. 5 entsprechende Darstellungen einer zweiten Ausführungsform des Federelementes,

Fig. 9 eine der Fig. 1 entsprechende Darstellung mit einem Federelement in der dritten Ausführungsform und

Fig. 10, 11 und 12 den Figuren 3 bzw. 4 bzw. 5 entsprechende Darstellungen der dritten Ausführungsform des Federelementes.

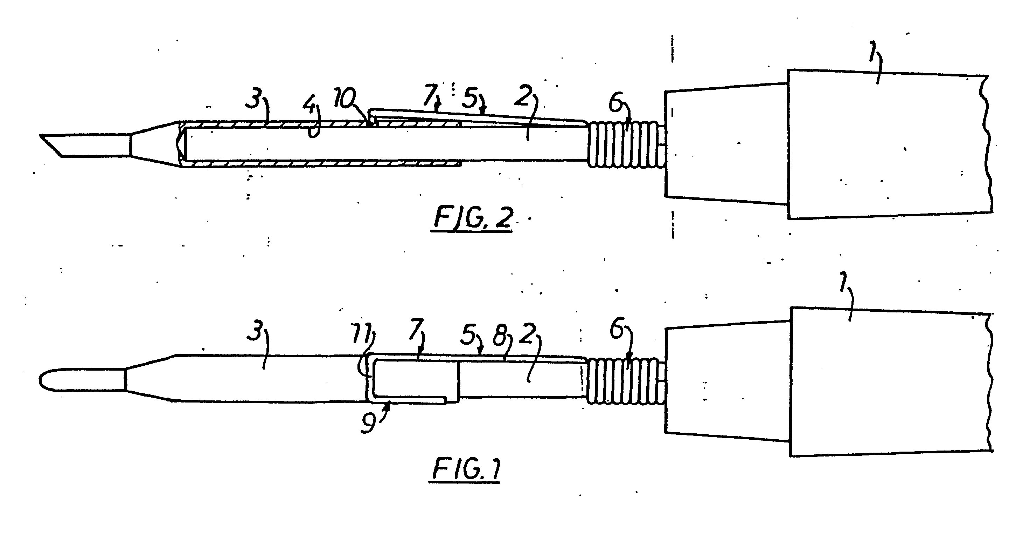

Die Figuren 1 und 2 zeigen einen Teil des Handgriffes 1 eines elektrischen Lötkolbens sowie das mit dem Heizkörper versehene Stielrohr 2 und eine auf dieses aufgesteckte Lötspitze 3. Diese weist eine Innenbohrung 4 auf, deren Innendurchmesser größer ist als der Außendurchmesser des Stielrohres 2. Somit ist die Lötspitze 3 mit einem Gleitsitz, d.h. mit einem Radialspiel auf das Stielrohr 2 aufgesteckt. Zur Befestigung der Lötspitze 3 dient ein Federelement 5. Dieses ist aus einem aus mehreren Federwindungen gebildeten ersten Federteil 6 und aus einem daran anschließenden hakenartigen zweiten Federteil 7 gebildet. Der Innendurchmesser der Federwindungen des ersten Federteiles 6 ist etwas größer, z.B. um 0,1 mm größer als der Außendurchmesser des Stielrohres 2. Das Federelement 5 kann mit seinem ersten Federteil 6 im ungespannten Zustand somit leicht und ohne große Kraftanstrengung auf das Stielrohr 2 aufgeschoben werden. Das hakenartige zweite Federteil 7 ist als federnder Haltearm 8 ausgebildet und wirkt auf die Lötspitze 3 zur Aufhebung des Radialspiels derselben auf dem Stielrohr 2 radial zum Stielrohr 2 federnd ein. Hierzu ist der federnde Haltearm 8 am Ende des zweiten Federteils U-förmig abgebogen und weist zur Anpassung an den Außendurchmesser der Lötspitze 3 ein passend gewölbtes Endteil 9 auf, welches in eine Querrinne oder einen Schlitz 10 eingreift, der in der Mantelfläche der Lötspitze 3 ausgebildet ist.

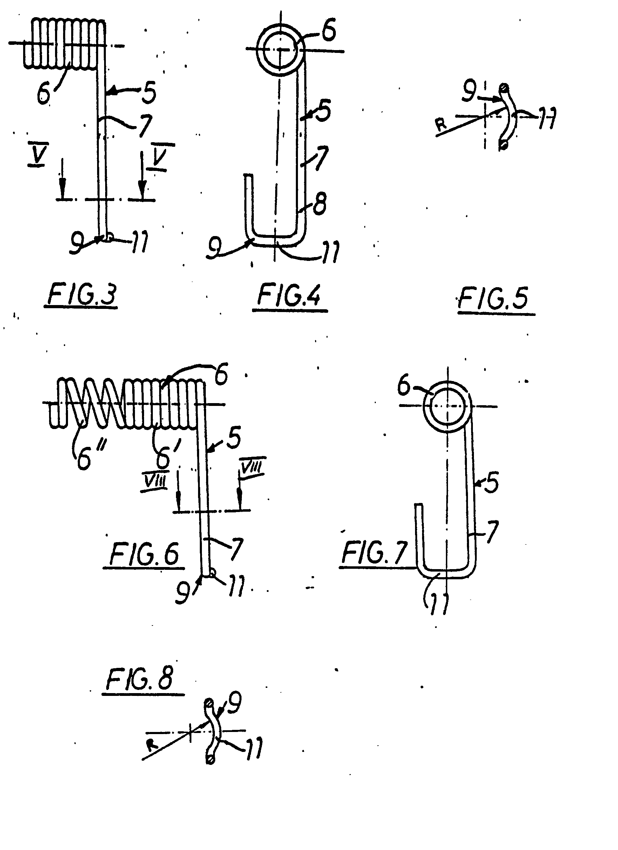

Die Fig. 3 bis 5 zeigen das Federelement 5 in der ersten Ausführungsform und im ungespannten Zustand. Das erste Federteil 6 umfaßt sieben Federwindungen, deren letzte in den federnden Haltearm 8 übergeht. Dieser weist das U-förmig gebogene Endteil 9 auf, das wiederum mit einem gewölbten Armteil 11 (Fig. 5) versehen ist. Das Material des Federelementes 5 ist Federstahldraht mit einem Ausgangsdurchmesser von 1 mm. Das Federelement 5 ist einstückig aus dem ersten Federteil 6 und aus dem zweiten Federteil 7 hergestellt.

Die in den Figuren 6 bis 8 dargestellte zweite Ausführungsform des Federelementes 5 unterscheidet sich von der ersten Ausführungsform gemäß Fig. 3 bis 5 dadurch, daß das erste Federteil 6 aus zwei Federwindungsteilen 6' und 6'' mit unterschiedlichen Federsteigungen ausgebildet ist. Dabei ist die Steigung des dem hakenartig ausgebildeten zweiten Federteiles 7 abgewandten Endes des Federwindungsteiles 6'' größer als die Steigung des anderen Endes des Federwindungsteiles 6' Hierdurch kann, ohne daß die Haltekraft auf dem Stielrohr 2 vermindert wird, die Länge des Federwindungsteils 6'' so bemessen werden, daß dieses bis auf Anschlag an den Handgriff 1 geführt werden kann.

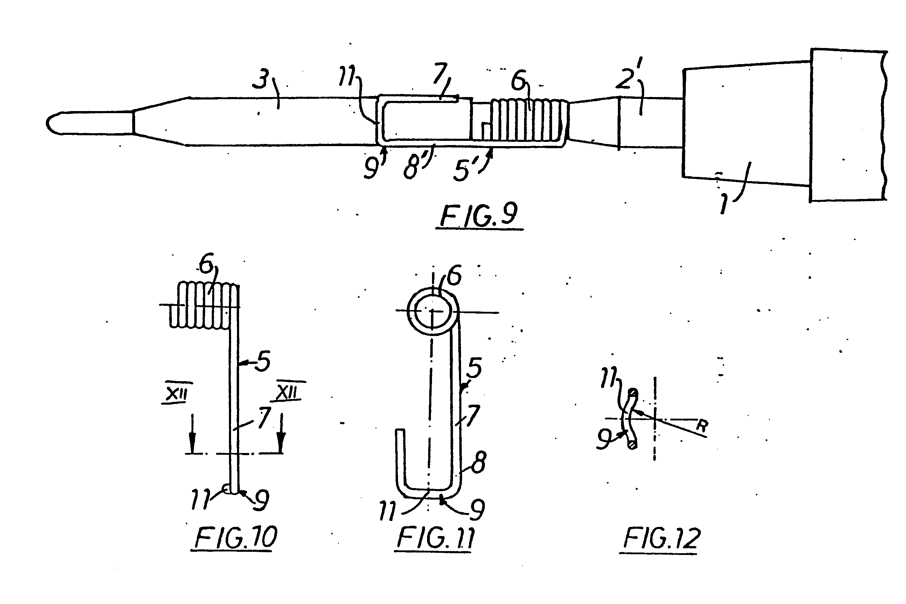

In den Fig. 9 bis 12 ist das Federelement 5'in der dritten Ausführungsform dargestellt. Diese Ausführungsform findet Anwendung, wenn wenig Platz auf dem Stielrohr 2' zwischen dem Ende der Lötspitze 3 und dem Anfang eines im Durchmesser größeren Teiles des Stielrohres 2' vorhanden ist. In diesem Fall schließt der Hebelarm 8'des zweiten Federteiles 7 sich an dem Ende des ersten Federteiles 6 an, das zur Verdickung des Stielrohres 2'gerichtet ist, wie es in Fig. 9 dargestellt ist. Die in den Fig. 10 bis 12 dargestellte dritte Ausführungsform des Federelementes 5' entspricht im ungespannten Zustand im wesentlichen der in den Fig. 3 bis 5 dargestellten ersten Ausführungsform. Unterschiedlich ist allein die Ausrichtung des gewölbten Armteiles 11 des Endteiles 9 des zweiten Federteiles 7. Die Wölbung 11 ist auf der dem ersten Federteil 6 zugewandten Seite des Haltearmes 8'angeordnet, so daß die sich an die Lötspitze 3 anpassenden Innenform der Wölbung 11 zu der vom ersten Federteil 6 abgewandten Seite des Haltearmes 8' geöffnet ist.

Alle drei Ausführungsformen von Federelementen 5 besitzen am hakenartigen zweiten Federteil 7 das mit seinem gewölbten Armteil 11 passend gewölbte Endteil 9, welches zur Verdrehsicherung und Halterung der Lötspitze 3 in die in deren Mantelfläche eingebrachte Querrille oder Schlitz eingreift oder aber auf der ungeschlitzten Lötspitze federnd aufliegt.

**Patentansprüche**

1. Lötkolben mit einer auf das freie Ende des Stielrohres (2) mit einem Gleitsitz aufgesteckten Lötspitze (3) und mit einem zu deren Befestigung auf dem Stielrohr (2) dienenden Federelement (5) aus einem aus mehreren auf das Stielrohr (2) aufgeschobenen Federwindungen gebildeten ersten Federteil (6) und aus eine daran anschließenden, die Lötspitze (3) auf dem Stielrohr (2) haltenden, hakenartigen zweiten Federteil (7). dadurch gekennzeichnet, daß der Innendurchmesser der Federwindungen des ersten Federteiles (6) etwas größer ist als der Außendurchmesser des Stielrohres (2) und daß das hakenartige zweite Federteil (7) als federnder Haltearm (8) ausgebildet ist und auf die Lötspitze (2) zur Aufhebung des Radialspiels derselben auf dem Stielrohr (2) radial zum Stielrohr (2) federnd einwirkt.

2. Lötkolben nach Anspruch 1, dadurch gekennzeichnet, daß der Innendurchmesser der Federwindungen des ersten Federteiles (6) etwa 0,l mm größer ist als der Außendurchmesser des Stielrohres (2).

3. Lötkolben nach Anspruch 1 oder 2, dadurch gekennzeichnet, daß das erste Federteil (6) aus zwei Federwindungsteilen (6', 6'') unterschiedlicher Federsteigung ausgebildet ist.

4. Lötkolben nach Anspruch 3, dadurch gekennzeichnet, daß die Steigung des dem hakenartigen zweiten Federteil (7) abgewandten Federwindungsteiles (6'') größer ist als die Steigung des anderen Federwindungsteiles (6').

5. Lötkolben nach einem der Ansprüche 1 bis 4, dadurch gekennzeichnet, daß das hakenartige zweite Federteil (7) im ungespannten Zustand unter etwa 90° zur Längsachse des ersten Federteiles (6) abgewinkelt ist.

6. Lötkolben nach einem der Ansprüche 1 bis 5, dadurch gekennzeichnet, daß das hakenartige zweite Federteil (7) am Ende des Haltearmes (8) ein U-förmig gebogenes und zur Auflage auf der Lötspitze (3) passend gewölbtes Endteil (9) aufweist.

7. Lötkolben nach einem der Ansprüche 1 bis 6, dadurch gekennzeichnet, daß die Lötspitze (2) zur Aufnahme des gewölbten Endteiles (9) des hakenartigen zweiten Federteiles (7) quer zur Längsachse der Lötspitze (2) eine in ihrer Mantelfläche ausgebildete Querrinne oder einen Schlitz (10) aufweist.

**Revendications**

1. Appareil à braser comprenant une pointe à braser (3) mise en un logement glissant sur l'extrémité libre du tuyau à manche (2) et comprenant un élément de ressort (5) servant de fixation de ladite pointe à braser audit tuyau à manche et composé d'une première partie de ressort (6) formée de plusieurs spires de ressort glissées sur le tuyau à manche (2) et d'une deuxième partie de ressort (7) successive en forme de crochet et tenant la pointe à braser au tuyau à manche caractérisé en ce quue le diamètre interieur des spires de ressort de la première partie de ressort (6) est un peu plus grand que le diamètre extérieur du tuyau à manche (2). et que la deuxième partie de ressort (7) en forme de crochet est agencée sous la forme d'urn bras supporteur (8) à ressort et agit en manière de ressort radialement par rapport au tuyau à manche (2) sur la pointe à braser (2) pour la compensation du jeu radial de ladite pointe à braser sur ledit tuyau à manche.

2. Appareil à braser selon la revendication 1 caractérisé en ce que le diamètre intérieur des spires de ressort de la premiere partie de ressort (6) est par environ 0 1 mm plus grand que le diametre extérieur du tuyau à manche (2).

3. Appareil à braser selon la revendicatiorn 1 oun 2 caractérisé en ce que la première partie de ressort (6) est composée de deux parties de spires de ressort (6' 6'') ayarnt de différents angles de hélice.

4. Appareil à braser selon la revendication 3, caractérisé en ce que l'angle de hélice de la partie de spires de ressort (6'') opposée à la deuxième partie de ressort (7) en forme de crochet est plus grand que l'angle de hélice de l'autre partie de spires de ressort (6').

5. Appareil à braser selon une des revendications 1 à 4, caractérisé en ce que la deuxième partie de ressort (7) en forme de crochet est coudée en état détent sous un angle d'environ 90° par rapport à l'axe longitudinal de la première partie de ressort (6).

6. Appareil à braser selon une des revendications 1 à 5, caractérisé en ce que la deuxième partie de ressort (7) en forme de crochet comporte à l'extrémité du bras supporteur (8) une partie finale (9) arquée en forme d'U pour logement sur la pointe à braser (3).

7. Appareil à braser selon une des revendications 1 à 6, caractérisé en ce que la pointe à braser (2) comporte pour logement de la partie finale (9) arquée de la deuxième partie de ressort (7) en forme de crochet dans sa surface extérieure un canal transversal ou une fente (10).

**Claims**

1. A soldering iron comprising a soldering tip (3) mounted in a sliding fit on the free end of the post tube (2) and comprising a spring member (5) for fixing said soldering tip on said post tube, said spring member being composed of a first spring section (6) formed of several spring windings slid on the post tube (2) and of an adjacent, hook-type second spring section (7) holding the soldering tip (3) on the post tube (2), characterised in that the interior diameter of the spring windings of the first spring section (6) is slightly greater than the exterior diameter of the post tube (2), and that the hook-type second spring section (7) is designed as a spring-type holding arm (8) and acts in spring-type manner on the soldering tip (2) radially to the post tube (2) for compensation of the radial play of the soldering tip on said post tube.

2. A soldering iron according to claim 1, characterised in that the interior diameter of the spring windings of the first spring section (6) is approximately 0.l mm greater than the exterior diameter of the post tube (2).

3. A soldering iron according to claims 1 or 2, characterised in that the first spring section (6) is formed of two spring winding pertions (6', 6'') having different spring pitches.

4. A soldering iron according to claim 3, charactèrised in that the pitch of the spring winding portion (6'') turned away from the hook-type second spring section (7) is greater than the pitch of the other spring winding portion (6').

5. A soldering iron according to one of claims 1 to 4, characterised in that the hook-type second spring section (7) is bent off in untensioned condition by approximately 90° relative to the longitudinal axis of the first spring section (6).

6. A soldering iron according to one of claims 1 to 5, characterised in that the hook-type second spring section (7) comprises at the end of the holding arm (8) a U-shaped, curved end section (8) being adapted to be supported on the soldering tip (3).

7. A soldering iron according to one of claims 1 to 6, characterised in that the soldering tip (2) comprises in its surface laterally to its longitudinal axis a transverse channel or slot (10) for receiving the curved end section (9) of the hook-type second spring section (7).

_FIG. 2_

_FIG. 1_

EP 0 238 439 B1

*FIG.3*

*FIG.4*

*FIG.5*

*FIG.6*

*FIG.7*

*FIG.8*

*FIG.9*

*FIG.10*

*FIG.11*

*FIG.12*

EP 0 238 439 B1